## Europäisches Patentamt

## European Patent Office

## Office européen des brevets

(11) Publication number: **0 141 600**
**B1**

## EUROPEAN PATENT SPECIFICATION

(45) Date of publication of patent specification: **02.03.88**

(51) Int. Cl.⁴: **G 21 C 3/32**

(21) Application number: **84307217.4**

(22) Date of filing: **19.10.84**

(54) Nuclear reactor fuel assembly with fuel rod removal means.

(30) Priority: **25.10.83 US 545419**

(43) Date of publication of application:
**15.05.85 Bulletin 85/20**

(45) Publication of the grant of the patent:
**02.03.88 Bulletin 88/09**

(84) Designated Contracting States:
**BE FR GB SE**

(56) References cited:
**EP-A-0 007 251**
**DE-A-3 228 380**
**FR-A-1 506 946**
**FR-A-2 300 930**
**FR-A-2 533 350**

(73) Proprietor: **WESTINGHOUSE ELECTRIC CORPORATION**
**Westinghouse Building Gateway Center**
**Pittsburgh Pennsylvania 15235 (US)**

(72) Inventor: **Gjertsen, Robert Kenneth**
**126 Penn Lear Drive**
**Monroeville Pennsylvania (US)**
Inventor: **Wilson, John Francis**
**3560 Meadowgate Drive**
**Murrysville Pennsylvania (US)**
Inventor: **Weiland, Walter Franz, Jr.**
**3569 Meadowgate Drive**
**Murrysville, Pennsylvania 15668 (US)**

(74) Representative: **van Berlyn, Ronald Gilbert**
**23, Centre Heights**
**London, NW3 6JG (GB)**

Courier Press, Leamington Spa, England.

## Description

The present invention relates generally to fuel assemblies for nuclear reactors, and, more particularly, to a fuel assembly wherein selected ones of its fuel rods can be removed remotely without disassembling the assembly.

In most nuclear reactors, the core portion comprises a large number of elongated fuel elements or rods grouped in and supported by frameworks referred to as fuel assemblies. The fuel assemblies are generally elongated and receive support and alignment from upper and lower transversely extending core suport plates. In the most common configuration, the axis of the core support barrel extends vertically and the various fuel assemblies are also arranged vertically, and they rest on the lower support plate. Conventional designs of these fuel assemblies include a plurality of fuel rods and control rod guide thimbles held in an organized array by grids spaced along the fuel assembly and attached to the control rod guide thimbles. Top and bottom nozzles at the opposite ends of the assembly are secured to the control rod guide thimbles so as to form an integral fuel assembly. The top and bottom nozzles extend slightly above and below, respectively, the ends of the fuel rods, capturing the rods therebetween.

It is common practice, upon startup of new or prototype reactors, to routinely inspect and examine selected ones of the fuel assemblies after started time intervals of operation. Besides checking for failed fuel rods and examining the wear to the assembly and the deterioration characteristics of the fuel rods themselves, some of the fuel rods may be exchanged with another type of rod wherein a more desired enrichment of the fission materials is sought. Normally, during operation of a reactor, the fuel assemblies in the active core region are submerged under approximately 10 meters of water, or other suitable coolant, and each fuel assembly is snugly fitted among adjacent assemblies of the organized array. Thus, in order to perform the examination and inspection process, a selected fuel assembly is generally lifted out from its operating position and removed completely from the reactor or to a convenient work station where the necessary inspection and examination steps are performed while the assembly is still submerged under approximately two meters of coolant water. If it is detected that some of the rods have failed or if it is desired to exchange or substitute rods of different composition, it was the past practice to discard the whole fuel assembly and install a new one in its place.

More recently, reconstitutable fuel assemblies have been developed, and, rather than discarding an assembly, it can now be refurbished or reconstituted so that many of its expensive components are saved. Conventional reconstitutable fuel assemblies incorporate design features wherein the top nozzle is removed from the assembly to provide access to the fuel rods contained therein. After rod removal and replacement, a new or refurbished top nozzle is secured to the assembly. Due to the space restrictions among the assemblies and the difficulty of working on an assembly located ten meters under water, reconstitution of a fuel assembly is generally carried out at a remote work station rather than in place. Although reconstitution is less costly than discarding a fuel assembly, it involves labor and down time of the reactor which all equate into added costs.

Thus, in view of the high costs associated with replacing and/or reconstituting fuel assemblies, it is the principal object of the invention to provide an improved fuel assembly which can be used in the startup of new or prototype reactors, and wherein a limited number of fuel rods can be removed and replaced remotely for on-site inspection and examination without disassembling the fuel assembly or removing it to another location.

Broadly stated, the invention is directed towards a nuclear reactor fuel assembly having a bottom nozzle, at least one longitudinally extending control rod guide thimble attached to and projecting upwardly from the bottom nozzle, a plurality of transverse grids spaced along the thimble, an organized array of elongated fuel rods transversely spaced and supported by the grids, and a top nozzle which is so constructed as to be attached to the upper end portion of the thimble to form an integral assembly while permitting remote removal of selected ones of the fuel rods for on-site examination without disassembling the fuel assembly.

The invention consists in a fuel assembly for a nuclear reactor, including a top nozzle, a bottom nozzle, at least one control-rod guide thimble extending upward from the bottom nozzle, a plurality of transverse grids spaced along the thimble, and an organized array of elongate fuel rods supported by the grids in substantially parallel spaced relationship with each other and axially captured between the bottom and top nozzles, characterized in that the top nozzle includes a transversely extending adapter plate which is formed by an integral arrangement of cross-laced ligaments defining a plurality of coolant-flow openings, and which adapter plate is supported on an upper end portion of the thimble at a level above the upper ends of said fuel rods and with ligaments thereof disposed in overlying relation with respect to corresponding ones of the fuel rods so as to prevent passage of said fuel rods through said coolant-flow openings; and plug means confined within said adapter plate and positioned over preselected ones of the fuel rods, said plug means being removable to provide access to at least one fuel rod for removal thereof from the fuel assembly without removal of the top nozzle, the plug means comprising a retainer portion and a removable plug portion removably retained therein, said retainer portion being disposed between and affixed to adjacent ones of said ligaments.

Preferably, the plug portion is cylindrical and has external threads, and the retainer portion has a cylindrical bore which is internally threaded, whereby the plug can be threadably secured in the retainer. In order to ensure that the access plug does not vibrate loose, locking means are provided in the form of upstanding tabs on the plug portion which are bent over into engagement with indentations provided on the top surface of the retainer portion adjacent its bore. Axial b ores through the plug portion are provided to allow coolant to pass through, but they are of such dimensions as to prohibit a fuel rod from moving upwardly into the plug portion.

Furthermore, the top nozzle in the preferred embodiment includes a hold-down plate axially spaced above the adapter plate. The hold-down plate has at least one coolant-flow hole defined therethrough and is mounted on the upper end of the thimble such that its coolant flow hole is positioned over the plug portion, whereby, upon removal of the plug portion from its retainer portion, a fuel rod can be lifted vertically upward and out of the fuel assembly. Preferably, this coolant flow hole, in the hold-down plate, has a larger cross-sectional dimension than that of the plug portion.

A preferred embodiment of the invention will now be described, by way of example only, with reference to the accompanying drawings, in which:—

Figure 1 is a partially sectioned, elevational view, with parts broken away for clarity, of a fuel assembly embodying the invention;

Figure 2 is an enlarged top plan view of the fuel assembly shown in Figure 1, showing two access plugs in the adapted plate of the top nozzle;

Figure 3 is an enlarged sectional view, taken along line 3—3 of Figure 1, which shows one of the access plugs in place and the other access plug removed for exposing four fuel rods for removal;

Figure 4 is an enlarged, perspective view of the plug retainer portion removed from the top nozzle, and

Figure 5 is an enlarged, perspective view of the removable plug portion after removal from the top nozzle.

In the following description, like reference characters designate like or corresponding parts throughout the several views, and terms such as "forward", "rearward", "left", "right", "upwardly", "downwardly", and the like, are used therein merely as words of convenience not to be construed as limiting terms.

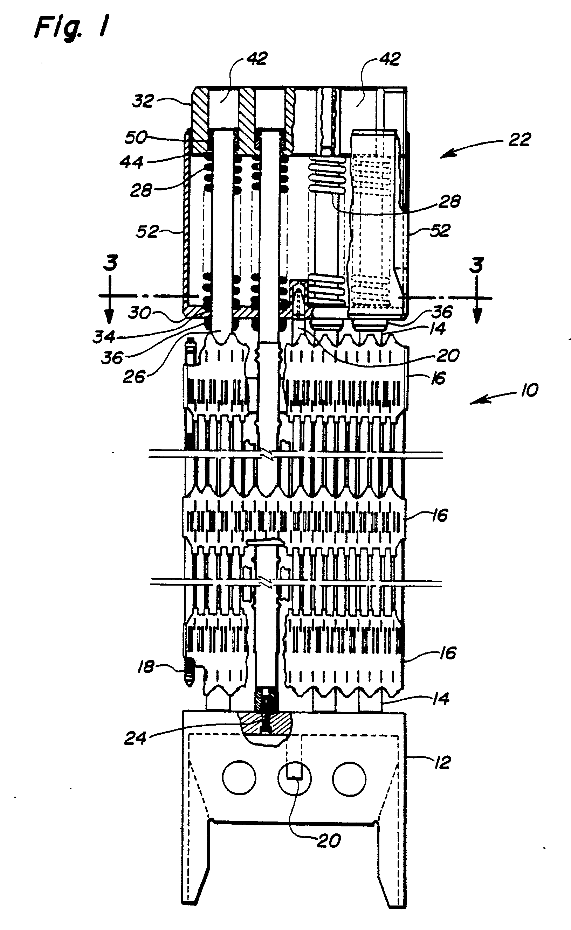

Referring now to the drawings, and particularly to Figure 1, the fuel assembly 10 shown therein basically comprises a lower end structure or bottom nozzle 12 for supporting the assembly on the lower core plate (not shown) in the core region of a reactor (not shown); a number of control-rod guide tubes or thimbles 14 projecting upwardly from the bottom nozzle 12 and extending longitudinally through the assembly; a plurality of transverse grids 16 axially spaced along the guide thimbles 14; and an organized array of elongated fuel rods 18 (only one of which is shown in Figure 1 for clarity) transversely spaced from each other and supported by the grids 16. In this embodiment, the lower ends of the elongate fuel rods 18 are shown as being axially held and spaced above the bottom nozzle 12, although they also could rest upon the upper surface of the bottom nozzle 12. An instrumentation tube 20 is located at the center of the fuel assembly 10. Attached to the upper ends of the guide themselves 14 is an end structure or top nozzle, generally designated with the numeral 22, to form an integral assembly capable of being conventionally handled without damaging the assembly components.

In forming the fuel assembly 10, the transverse grids 16 are attached to the longitudinally extending guide thimbles 14 at predetermined axially spaced locations; the fuel rods 18 are inserted from below through the grids 16; the bottom nozzle 12 is then suitably attached, such as by machine screws 24, to the lower ends of the guide thimbles; and finally the top nozzle 22 is attached to the upper end portions of the guide thimbles 14. Control rods (not shown) for controlling the fission process are reciprocally movable in the control-rod guide thimbles 14 of the fuel assembly 10.

The fuel assembly 10 illustrated in the drawings is shown as having a square array (19 × 19) of fuel rods 18, with sixteen control-rod guide thimbles 14 strategically arranged within the fuel rod array. Furthermore, the bottom nozzle 12 and the top nozzle 22 are generally square in cross-section, and each of the control-rod guide thimbles 14 has a separate guide thimble extension 26 connected to the upper end of the associated guide thimble 14 so as to form a normal extension to the guide thimble. Each guide thimble extension 26, referred to hereafter as thimble extension, is coaxial with respect to the associated guide thimble 14 and has substantially the same diameter as the guide thimble 14, the extension 26 preferably being connected to the upper end of the guide thimble 14 in a suitable manner, such as through bulge-fitting. It is to be understood, however, that the invention is not limited in its applicability to the particular shape of the nozzles or the number and configuration of fuel rods and guide thimbles or the use of thimble extensions shown herein.

In the preferred embodiment, the top nozzle 22 is shown in the form of a subassembly including hold-down means permitting the fuel assembly 10 to be placed in the core region and with its top surface in direct contact with the upper core alignment/support plate and providing a hold-down force to prevent hydraulic lifting of the fuel assembly during upward coolant flow, while allowing for changes in fuel assembly length due to core induced thermal expansion and the like.

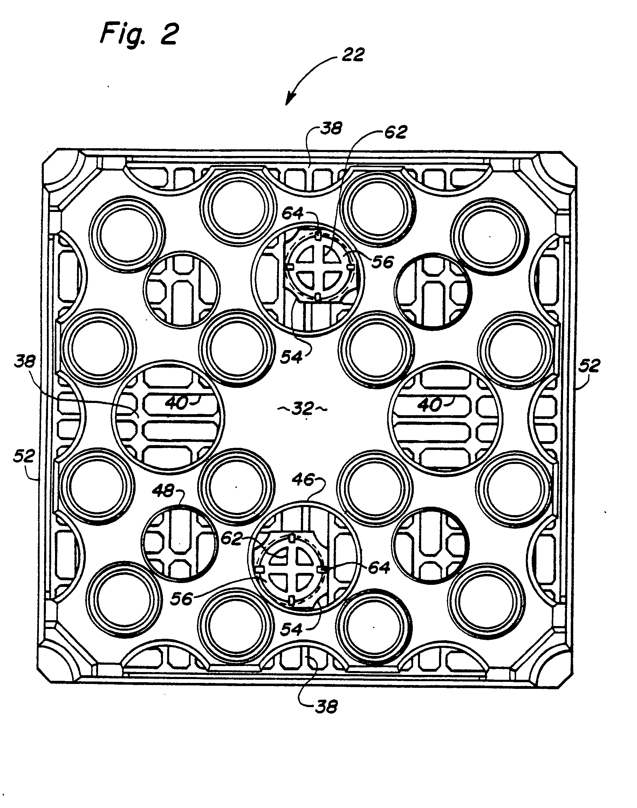

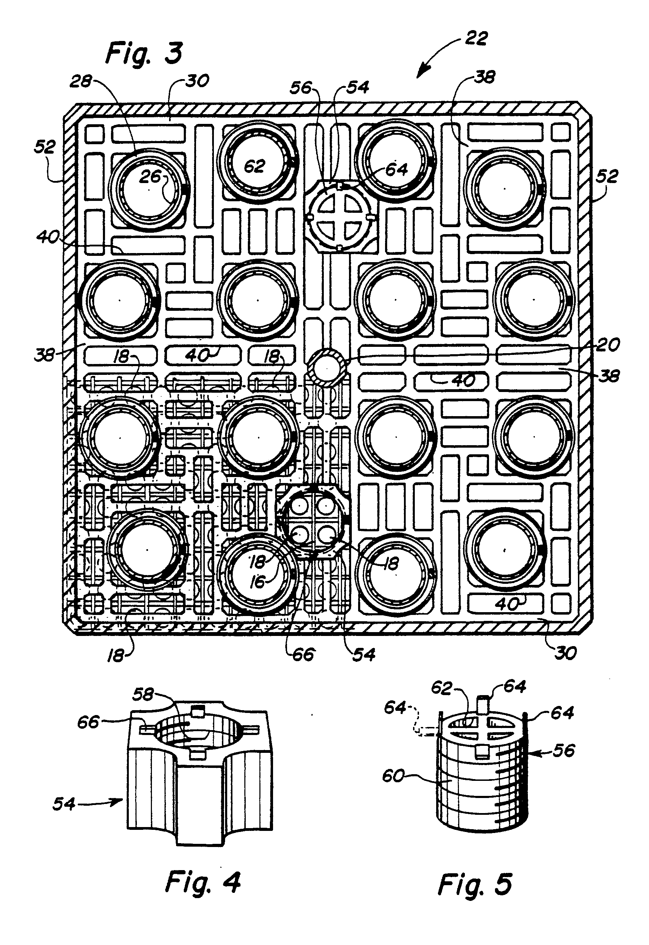

As seen from Fig. 1, the top nozzle subassembly comprises coil springs 28 each disposed about the upper end portion of the associated guide thimble extensions 26 and sandwiched between a lower adapter plate 30 and an upper hold-down plate 32. The lower adapter plate 30 is slidably mounted by means of holes 34, on the thimble extensions 26, its downward movement along the thimbles being limited by retainers 36, one of which is mounted on each thimble extension 26 at a location axially spaced above the upper ends of the fuel rods 18. The adapter plate 30 comprises an arrangement of integral cross-laced ligaments 38 (see Figs. 2 and 3) defining a plurality of coolant flow openings 40 of oblong shape, and it is positioned and oriented on the thimble extensions 26 such that portions of the ligaments 38 overlie the upper ends of the fuel rods 18 for preventing the fuel rods from moving upward through the coolant flow openings 40; thus, fuel rods 18 are axially restrained or captured between the top nozzle 22 and the bottom nozzle 12.

The upper hold-down plate 32 is also slidably mounted on the thimble extensions 26 by means of passageways 42 (Fig. 1) each having an internal ledge 44 formed therein. The hold-down plate 32 is also provided with a number of relatively large coolant flow openings 46 (Fig. 2) and several smaller coolant flow openings 48 formed in the plate 32 at predetermined locations. Spaced axially above each retainer 36 (Fig. 1) is another retainer 50 mounted on the respective thimble extension 26 and disposed within the respective passageways 42. The retainers 50 cooperate with the internal ledges 44 to limit the upward movement of the hold-down plate 32 along the thimble extensions 26. In order to define an enclosure for channeling the coolant flow upward at the upper region of the fuel assembly 10, upright sidewalls 52 are formed on the peripheral edges of the lower adapter plate 30. It should be noted that the fuel rod removal means now to be described are not limited in their use to the particular top nozzle subassembly shown in the drawings and described above.

In accordance with the invention, the fuel assembly 10 is provided with means for removing selected ones of the fuel rods 18 from the assembly while in the active core region of a reactor (not shown) and without disassembling the assembly (such as by removing the top nozzle 22 therefrom). More particularly, and as seen from Figures 2 and 3, the fuel assembly 10 is provided with a pair of access plugs each having a retainer portion 54 and a plug portion 56, and which plugs are confined within the lower adapter plate 30 of the top nozzle 22 and specifically located above preselected ones of the fuel rods 18 (see Figure 3).

As best seen from Figures 3 and 4, the retainer portion 54 of each access plug is more or less cross-shaped, having concave corners, and is disposed between portions of the ligaments 38. The retainer portion 54 is retained between the ligaments by having its lateral faces suitably secured, such as welded, to the adjacent ligament portions. In order to locate the retainer portion 54 within the adapter plate 30, predetermined sections or portions of the ligaments 38 are cut and removed to provide the physical space and clearance for proper positioning of the retainer portion 54 between adjacent ligaments 38. In the preferred embodiment, the retainer portion 54 has therethrough an axial bore 58 of a diameter sufficient to permit access to, and the removal of, four fuel rods 18. Preferably, the axial bore 58 is internally threaded.

The plug portion 56 (best seen in Figure 5) of each access plug is in the form of a cylinder which fits into the bore 58 of the retainer portion 54 and preferably is provided with external threads 60 for threaded engagement with the internal threads in the walls of the bore 58. Four pie-shaped passages 62 extend axially through the plug portion 56 to allow coolant to flow therethrough, the cross-sectional dimensions of the passages however being such as to prevent any fuel rod from extending or passing through any of the passages 62.

In order to ensure that the plug portion 56 remains threadably secured within the threaded bore 58 of retainer portion 54 and does not unloosen under vibration occurring during operation of the fuel assembly 10, locking means have been provided in the form of tabs 64 and indentations 66. The tabs 64 are provided on the upper end of the plug portion 56 and are adapted to be bent over into locking engagement with the corresponding indentations 66 formed in the upper end surface of the retainer portion 54 and extending radially outward from the bore 58.

As best seen from Figure 2, the large coolant flow openings 46 in the hold-down plate are so located that one of them overlies one of the access plugs and another overlies the other access plug. The overlying relationship or alignment is such that when the plug portion 56 is unscrewed and removed from the retainer portion 54, the upper ends of the four underlying fuel rods 18 can be grabbed for lifting the rods vertically out of the fuel assembly 10 through the bore 58 of the retainer portion 54 and through the coolant flow opening 46. This removal. of fuel rods, and subsequent replacement thereof in the same way, can take place, of course, while the assembly is situated in the active core region and without removal of the top nozzle.

## Claims

1. A fuel assembly for a nuclear reactor, including a top nozzle (22), a bottom nozzle, at least one control-rod guide thimble (14) extending upward from the bottom nozzle, a plurality of transverse grids spaced along the thimble, and an organized array of elongate fuel rods (18) supported by the grids in substantially parallel spaced relationship with each other and axially captured between the bottom and top nozzles, characterized in that the top nozzle (22) includes a transversely extending adapter plate (30) which is formed by an integral arrangement of cross-laced ligaments (38) defining a plurality of coolant-flow openings (40), and which adapter plate is supported on an upper end portion of the thimble (14) at a level above the upper ends of said fuel rods (18) and with ligaments thereof disposed in overlying relation with respect to corresponding ones of the fuel rods so as to prevent passage of said fuel rods through said coolant-flow openings; and plug means (54, 56) confined within said adapter plate (30) and positioned over preselected ones of the fuel rods, said plug means being removable to provide access to at least one fuel rod for removal thereof from the fuel assembly (10) without removal of the top nozzle (22), the plug means comprising a retainer portion (54) and a removable plug portion (56) removably retained therein, said retainer portion being disposed between and affixed to adjacent ones of said ligaments (38).

2. A fuel assembly according to claim 1, characterized in that said retainer portion (54) has a bore (58) exceeding therethrough, said plug portion (56) being removably disposed in said bore.

3. A fuel assembly according to claim 2, characterized in that said bore (58) is cylindrical and internally threaded, and said plug portion (56) is a cylindrical and externally threaded plug threadably engaged in said bore with the retainer portion.

4. A fuel assembly according to claim 2 or 3, characterized in that said bore (58) has a cross-sectional dimension greater than the cross-sectional dimension of said at least one fuel rod.

5. A fuel assembly according to claim 2, 3 or 4 characterized in that said plug portion (56) has coolant-flow passages (62) extending axially therethrough, each of said coolant flow passages having a cross-sectional dimension preventing a fuel rod from passing therethrough.

6. A fuel assembly according to any one of claims 1 to 5, characterized in that said removable plug means (54, 56) includes means (64, 66) for releasably locking the plug portion (56) in its inserted position within the retainer portion (54).

7. A fuel assembly according to claim 6, characterized in that said releasable locking means includes indentations (66) formed in a surface of one of the retainer and plug portions, and tabs (64) extending from a corresponding end of the other of said retainer and plug portions and bent over into locking engagement with said indentations.

8. A fuel assembly according to any one of claims 1 to 7, characterized by a hold-down plate (32) having formed therein at least one coolant-flow hole (46) which is larger in cross-section than said plug portion (56), said hold-down plate being mounted on the thimble (14) at a level above said adapter plate (30) and with said coolant-flow hole (46) aligned with said plug portion (56).

**Patentansprüche**

1. Brennelementanordnung für einen Kernreaktor, bestehend aus einer Kopfdüse (22), einer Bodendüse, mindestens einer Steuerstab-Tauchhülse (14), die von der Bodendüse nach oben absteht, einer Vielzahl von Quergittern im Abstand entlang der Tauchhülse und einer fortlaufenden Reihe länglicher Brennstäbe (18), die von den Gittern im wesentlichen parallel im Abstand zueinander gehalten und die axial zwischen der Boden- und Kopfdüse gelagert sind, dadurch gekennzeichnet, dass die Kopfdüse (22) eine quer verlaufende Adapterplatte (30) aufweist, die durch eine ganzzahlige Anordnung von kreuzweise angeordneten Ligamenten (38) gebildet ist, die eine Vielzahl von Kühlmittel-Durchlässen (40) begrenzen, wobei die Adapterplatte an einem oberen Endstück der Tauchhülse (14) in einer Ebene oberhalb der oberen Enden der Brennstäbe (18) angeordnet ist und deren Ligamente über den entsprechenden Ligamenten der Brennstäbe gelagert sind und dabei den Durchgang der Brennstäbe durch die Kühlmitteldurchlässe verhindern; und Stöpsel (54, 56) innerhalb der Adapterplatte (30) eingesetzt und über vorgewählten Brennstäben angeordnet sind, wobei diese Stöpsel entfernbar sind, um Zugang zu mindestens einem Brennstab zu schaffen und diesen ohne die Abnahme der Kopfdüse (22) aus der Brennelementanordnung (10) herausnehmen zu können, der Stöpsel aus einem Halteteil (54) und einem darin einsetzbaren aber herausnehmbaren Stöpselteil (56) besteht, wobei das Halteteil zwischen benachbarten Ligamenten (38) eingesetzt und befestigt ist.

2. Brennelementanordnung nach Anspruch 1, dadurch gekennzeichnet, dass das Halteteil (54) eine durchgehende Bohrung (58) aufweist, in der das Stöselteil (56) herausnehmbar eingesetzt ist.

3. Brennelementanordnung nach Anspruch 2, dadurch gekennzeichnet, dass die Bohrung (58) zylindrisch und mit einem Innengewinde versehen ist, während das Stöpselteil (56) zylindrisch und mit Aussengewinde versehen und in die Gewindebohrung des Halteteils einschraubbar ist.

4. Brennelementanordnung nach Anspruch 2 oder 3, dadurch gekennzeichnet, dass der Querschnitt der Bohrung (58) grösser ist als der Querschnitt des durch den Stöpsel abgedeckten Brennstabes.

5. Brennelementanordnung nach Anspruch 2, 3 oder 4, dadurch gekennzeichnet, dass das Stöpselteil (56) axial durchgehende Kühlmitteldurchlässe (62) aufweist, wobei der Querschnitt eines jeden Kühlmittel-Durchganges kleiner ist als derjenige eines Brennstabes.

6. Brennelementanordnung nach einem der Ansprüche 1 bis 5, dadurch gekennzeichnet, dass der entfernbare Stöpsel (54, 56) Mittel (64, 66) zum lösbaren Sperren des Stöpselteiles (56) im Halteteil (54) aufweist.

7. Brennelementanordnung nach Anspruch 6, dadurch gekennzeichnet, dass die lösbaren Sperrmittel durch Einkerbungen (66) in einer Oberfläche der Halte- und Stöpselteile und durch Laschen (64) gebildet sind, die von einem entsprechenden Ende des anderen Halte- und Stöpselteils abstehen und in Sperrstellung in die Einkerbungen biegbar sind.

8. Brennelementanordnung nach einem der Ansprüche 1 bis 7, dadurch gekennzeichnet, dass eine Halteplatte (32) vorgesehen ist, die mindestens ein Kühlmittel-Loch (46) aufweist, dessen Querschnitt grösser ist als derjenige des Stöpselteils (56), die Halteplatte an der Tauchdüse (14) oberhalb der Adapterplatte (30) angeordnet und das Kühlmittelloch (46) mit dem Stöpselteil (56) ausgerichtet ist.

**Revendications**

1. Assemblage combustible pour réacteur nucléaire, comprenant un embout supérieur (22), un embout inférieur, au moins un tube de guidage (14) de barres de contrôle s'étendant vers le haut à partir de l'embout inférieur, plusieurs grilles transversales espacées le long du tube, et un arrangement organisé de barres (18) de combustible allongées, supportées par les grilles dans une relation d'espacement essentiellement parallèle les unes avec les autres et emprisonnées axialement entre les embouts inférieur et supérieur, caractérisé en ce que l'embout supérieur (22) comprend une plaque d'adaptation (30), qui s'étend dans le sens transversal et qui est formée par un arrangement d'une seule pièce de ligaments (38) entrecroisés, définissant plusieurs ouvertures (40) d'écoulement de réfrigérant, cette plaque d'adaptation étant supportée sur une portion d'extrémité supérieure du tube (14) à un niveau se trouvant au-dessus des extrémités supérieures desdites barres (18) de combustible et les ligaments de cette plaque étant disposés dans une disposition de recouvrement par rapport aux barres de combustible correspondantes, de manière à empêcher le passage desdites barres de combustible à travers lesdites ouvertures d'écoulement de réfrigérant; et un moyen de fermeture (54, 56) enfermé dans ladite plaque d'adaptation (30) et positionné au-dessus de barres de combustible présélectionnées, ledit moyen de fermeture pouvant être démonté pour permettre l'accès à au moins une barre de combustible pour retirer celle-ci de l'assemblage combustible (10) sans enlever l'embout supérieur (22), le moyen de fermeture comprenant une portion d'arrêt (54) et une portion de fermeture (56) démontable retenue dans la portion (54) de manière à pouvoir être retirée, ladite portion d'arrêt étant disposée entre des ligaments adjacents desdits ligaments (38) et fixée à ceux-ci.

2. Assemblage combustible selon la revendication 1, caractérisé en ce que ladite portion d'arrêt (54) possède un trou (58) s'étendant à travers cette portion, ladite portion de fermeture (56) étant disposée de manière amovible dans ledit trou.

3. Assemblage combustible selon la revendication 2, caractérisé en ce que ledit trou (58) est cylindrique et fileté, et que ladite portion de fermeture (56) est une fermeture cylindrique et filetée, introduite de façon à pouvoir être vissée dans ledit trou avec la portion d'arrêt.

4. Assemblage combustible selon la revendication 2 ou 3, caractérisé en ce que ledit trou (58) possède une dimension de coupe transversale qui est supérieure à la dimension de coupe transversale d'au moins une barre de combustible.

5. Assemblage combustible selon la revendication 2, 3 ou 4 caractérisé en ce que ladite portion de fermeture (56) possède des passages (62) d'écoulement de réfrigérant qui s'étendant axialement à travers cette portion, chacun des passages d'écoulement de réfrigérant possédant une dimension de coupe transversale qui empêche une barre de combustible de passer par ce passage.

6. Assemblage combustible selon l'une quelconque des revendications 1 à 5, caractérisé en ce que ledit moyen de fermeture (54, 56) démontable comprend un moyen (64, 66) pour bloquer, de manière à pouvoir être dégagé, la portion de fermeture (56) dans sa position insérée dans la portion d'arrêt (54).

7. Assemblage combustible selon la revendication 6, caractérisé en ce que ledit moyen de blocage pouvant être dégagé comprend des encoches (66) formées dans une surface de l'une des portions d'arrêt et de fermeture, et des languettes (64) s'étendant à partir d'une extrémité correspondante de l'autre portion d'arrêt et de fermeture et pliées pour s'encastrer de façon bloquante dans lesdites encoches.

8. Assemblage combustible selon l'une quelconque des revendications 1 à 7, caractérisé par une plaque de retenue (32) dans laquelle est formé au moins un trou (46) d'écoulement de réfrigérant dont la coupe transversale est plus large que celle de ladite portion de fermeture (56), ladite plaque de retenue étant montée sur le tube (14) à un niveau supérieur à celui de la plaque (30) d'adaptation, le trou (46) d'écoulement de réfrigérant étant alignée avec la partie (56) de fermeture.

# Fig. 1

*Fig. 2*

Fig. 3

Fig. 4

Fig. 5